# EUROPEAN PATENT APPLICATION

(11) **EP 4 765 437 A1**
(43) Date of publication of application: **24.06.2026**
(21) Application number: 25738854.6
(22) Date of filing: 02.01.2025
(51) Int. Cl.: H01M 50/503, H01M 50/204

(54) **DEVICE FOR ASSEMBLING BATTERY MODULE**

(30) Priority: 09.01.2024 KR 20240003749
(71) Applicant: LG Energy Solution, Ltd., Seoul 07335 (KR)
(72) Inventor: OH, Hyun Min, Daejeon 34122 (KR); JEUNG, Seok Won, Daejeon 34122 (KR); KANG, Choon Kwon, Daejeon 34122 (KR); AHN, Da Hun, Daejeon 34122 (KR)
(74) Representative: Plasseraud IP
(86) International application number: PCT/KR2025/000066
(87) International publication number: WO 2025/150776

(57) **Abstract**

The present disclosure relates to a battery module assembly device, and a battery module assembly device according to one aspect of the present disclosure is a device for assembling busbars to a semi-assembly of a battery module, and the battery module assembly device may include a main frame in which busbar holes are formed; and a support frame movably coupled to the main frame to support the busbars disposed in the busbar holes or to release the support to allow the busbars to fall downward.

## Description

### TECHNICAL FIELD

### CROSS-REFERENCE TO RELATED APPLICATIONS

The present application claims priority to Korean Patent Application No. 10-2024-0003749 filed on January 9, 2024 in the Republic of Korea, the disclosures of which are incorporated herein by reference.

### TECHNICAL FIELD

The present disclosure relates to a battery module assembly device, and more specifically, to a battery module assembly device for assembling a busbar to a semi-assembly of a battery module.

### BACKGROUND ART

Secondary batteries have been applied to small-sized applications such as mobile devices or laptop computers, but recently, the research direction has been expanded to medium and large-sized applications, and they are widely used in applications requiring high voltage and large capacity in relation to energy storage systems (ESSs) or electric vehicles (EVs). When multiple battery cells composed of such secondary batteries are connected and coupled in a predetermined manner, a battery module may be formed.

Meanwhile, a busbar is a conductive member for electrically connecting predetermined objects. Such a busbar is provided inside a battery module and may perform a function of electrically connecting a plurality of battery cells to each other. Therefore, in the manufacturing process of a battery module, a process of assembling a busbar to a semi-assembly of a battery module is performed.

Conventionally, an operator manually assembles the busbar to the semi-assembly of the battery module. However, when the operator manually assembles the busbar in this way, there is a possibility that the busbar may be contaminated by external contamination sources.

For example, the semi-assembly of the battery module may have a part where an adhesive is applied to allow other parts to be attached, and in the process of assembling the busbar, the operator's hands may be contaminated by this adhesive. And, when the operator picks up other busbar with contaminated hands, the other busbar may be contaminated by the adhesive on the operator's hands.

When the busbar contaminated by external contamination sources is assembled to the semi-assembly in this way, there may be defects or failures in the battery module, which is the final product. For example, if a part of the busbar that is welded to the battery cell is contaminated, a welding defect may occur between the busbar and the battery cell, and thus the battery cell may not be electrically connected to an external power source or load.

Accordingly, there has been an urgent need to develop a battery module assembly device capable of assembling the busbar to the semi-assembly of the battery module while minimizing contact with potential contamination sources.

### SUMMARY

### TECHNICAL PROBLEM

The present disclosure is designed to solve the problems of the related art, and therefore the present disclosure is directed to providing a battery module assembly device capable of assembling a busbar to a semi-assembly of a battery module while minimizing contact with potential contamination sources.

Technical problems of the present disclosure are not limited to the above-described problems, and other problems not mentioned herein may be clearly understood by those having ordinary skill in the art from the following description of the present disclosure.

### Technical Solution

According to one aspect of the present disclosure, there is provided a battery module assembly device for assembling busbars to a semi-assembly of a battery module, and the battery module assembly device includes a main frame in which busbar holes are formed; and a support frame movably coupled to the main frame to support the busbars disposed in the busbar holes or to release the support to allow the busbars to fall downward.

At this time, the main frame may include a plate unit which has a plate shape with its lower surface facing an upper portion of the semi-assembly and through which the busbar holes are formed.

At this time, the main frame may further include a jig unit provided on a lower surface of the plate unit to fix relative positions of the plate unit and the semi-assembly.

At this time, the jig unit may include a pair of jig members extending downward from the lower surface of the plate unit and spaced apart with the busbar holes therebetween.

At this time, the jig unit may include a spacing member protruding from one of the pair of jig members toward the other.

At this time, the support frame may include a support unit slidably coupled to the main frame to allow the busbar disposed in the busbar hole to move from a first position supporting the busbar from a lower side to a second position spaced apart from the first position.

At this time, the main frame may have a plate unit which has a plate shape with its lower surface facing an upper portion of the semi-assembly and through which the busbar holes are formed, and the support unit may be configured to move on the lower surface of the plate unit to open and close at least a portion of the busbar holes.

At this time, the support unit may overlap at least a portion of the busbar holes in the vertical direction at the first position, and may be disposed to be misaligned with the busbar holes in the vertical direction at the second position.

At this time, the support unit may have a plate shape parallel to the lower surface of the plate unit.

At this time, the busbar holes may be provided in plurality and arranged in a row, and the support unit may extend in a direction in which the plurality of busbar holes are arranged.

At this time, the support frame may further include a guide unit extending downward from the support unit to guide busbars falling downward from the busbar holes.

At this time, a side portion of the guide unit may be provided with a guide surface facing the center of the busbar hole and extending in the vertical direction.

At this time, the guide surface may be perpendicular to the movement direction of the support unit.

At this time, the support frame may further include a catch unit extending in a direction perpendicular to the movement direction of the support unit from the support unit, wherein the catch unit may be in contact with the main frame when the support unit is positioned at the first position and may be spaced apart from the main frame when the support unit is positioned at the second position.

At this time, the battery module assembly device may further include a stopper for limiting the movement distance of the support frame, wherein the stopper may be spaced apart from the support frame when the support unit is positioned at the first position and may be in contact with the support frame when the support unit is positioned at the second position.

At this time, the stopper may include an extension unit extending parallel to the movement direction of the support frame from the main frame; and a stopper unit protruding from the extension unit to face the support frame in the movement direction.

At this time, the stopper may further include a cushioning unit provided on a side portion of the stopper unit to be in contact with or spaced apart from the support frame in the movement direction, wherein the cushioning unit may have a greater elasticity than the stopper unit.

At this time, the support frame may include a first support frame that supports one side of the busbar disposed in the busbar hole or releases the support; and a second support frame that supports the other side of the busbar disposed in the busbar hole or releases the support.

At this time, the first support frame and the second support frame may be configured to be sequentially movable with respect to the main frame.

At this time, the busbar hole may extend in the horizontal direction, and the support frame may be configured to be movable in the extension direction of the busbar hole.

### ADVANTAGEOUS EFFECTS

According to one aspect of the present disclosure, as the support frame is moved to release the support of the busbar disposed in the busbar hole in a state where the main frame is positioned on the upper side of the battery module semi-assembly, the busbar may be dropped from the busbar hole and assembled on the upper portion of the semi-assembly.

Accordingly, the contact between the operator and the busbar may be minimized in the process of assembling the busbar to the semi-assembly, so that contamination of the busbar by potential contamination sources may be prevented.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view showing a state in which a battery module assembly device according to an embodiment of the present disclosure is fixed to a semi-assembly of a battery module, viewed from above.
FIG. 2 is a perspective view of a semi-assembly and busbars assembled together by a battery module assembly device according to an embodiment of the present disclosure, viewed from above.
FIG. 3 is a perspective view of a battery module assembly device according to an embodiment of the present disclosure, viewed from above.
FIG. 4 is a perspective view of a battery module assembly device according to an embodiment of the present disclosure, viewed from below.
FIG. 5 is an enlarged view of part A of FIG. 3.
FIG. 6 is a cross-sectional view taken along line III-III of FIG. 5.
FIG. 7 is a cross-sectional view taken along line I-I of FIG. 1.
FIG. 8 is an enlarged view of part B of FIG. 7.
FIG. 9 is a vertical cross-sectional view taken along line II-II of FIG. 1.
FIG. 10 is an enlarged view of part C of FIG. 9. At this time, the first support frame is positioned at the first position.
FIG. 11 is an enlarged view of part D of FIG. 9. At this time, the second support frame is positioned at the third position.
FIG. 12 is an enlarged view of part C of FIG. 9. At this time, the first support frame is positioned at the second position.
FIG. 13 is an enlarged view of part D of FIG. 9. At this time, the second support frame is positioned at the fourth position.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

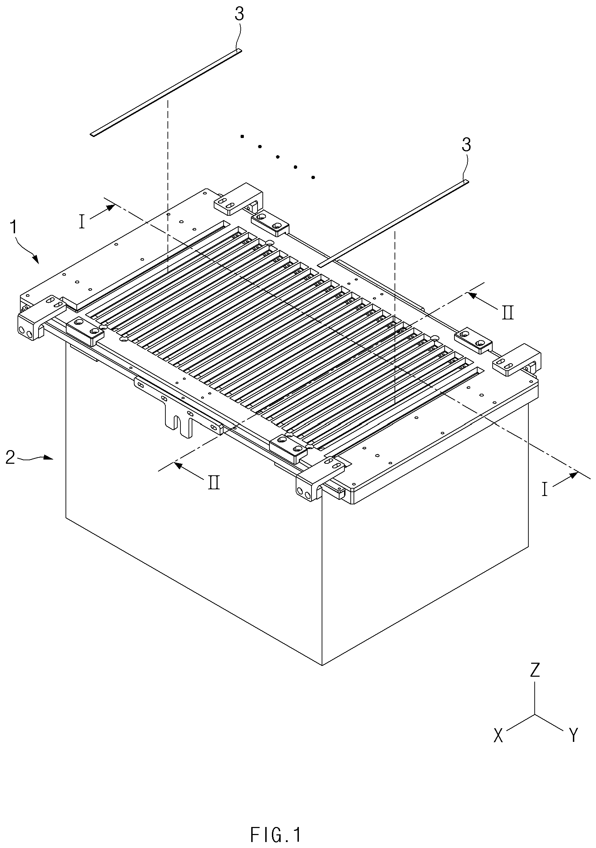

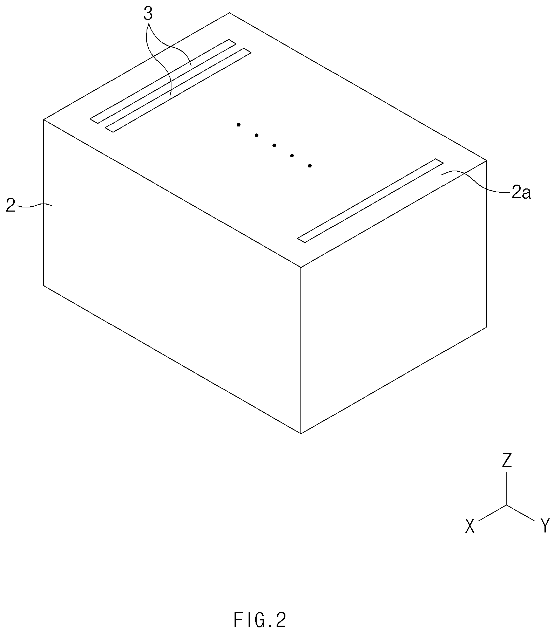

FIG. 1 is a perspective view showing a state in which a battery module assembly device according to an embodiment of the present disclosure is fixed to a semi-assembly of a battery module, viewed from above. FIG. 2 is a perspective view of a semi-assembly and busbars assembled together by a battery module assembly device according to an embodiment of the present disclosure, viewed from above.

FIG. 1 discloses a battery module assembly device 1 (hereinafter, referred to as an assembly device) according to an embodiment of the present disclosure. Referring to FIG. 1, an assembly device 1 according to an embodiment of the present disclosure is a device for assembling a busbar 3 to a semi-assembly 2.

Before describing the assembly device 1 according to an embodiment of the present disclosure, the semi-assembly 2 and the busbar 3 assembled together by the assembly device 1 will be briefly described.

Referring to FIGS. 1 and 2, in the present disclosure, the semi-assembly 2 may be a semi-assembly for manufacturing a battery module. Although not shown in detail, the semi-assembly 2 may be composed of a plurality of battery cells and a module frame or a module housing for supporting them. As shown, the semi-assembly 2 may have an overall hexahedral shape.

In the present disclosure, the busbar 3 may be a busbar for electrically connecting a plurality of battery cells provided in the semi-assembly 2, or a busbar for connecting a plurality of battery cells to an external power source or load. The plurality of battery cells may be connected in series or in parallel by the busbar 3.

To this end, electrode leads of the plurality of battery cells may be electrically connected to the busbar 3. As an example, the electrode leads may be welded to the busbar 3. Therefore, the busbar 3 should not be contaminated to facilitate welding.

As shown, the busbar 3 may have a rod shape extending long in one direction. And, the busbar 3 may be configured in plurality to connect multiple battery cells. Such busbars 3 may be assembled on the upper surface 2a of the semi-assembly 2.

Meanwhile, the semi-assembly 2 and the busbar 3 described above are only examples of the semi-assembly and the busbar that can be assembled by the assembly device 1 according to an embodiment of the present disclosure, and the assembly device 1 according to an embodiment of the present disclosure may be used to assemble the semi-assembly and the busbar having various shapes or structures to each other.

Hereinafter, the battery module assembly device according to an embodiment of the present disclosure will be described in more detail with different drawings.

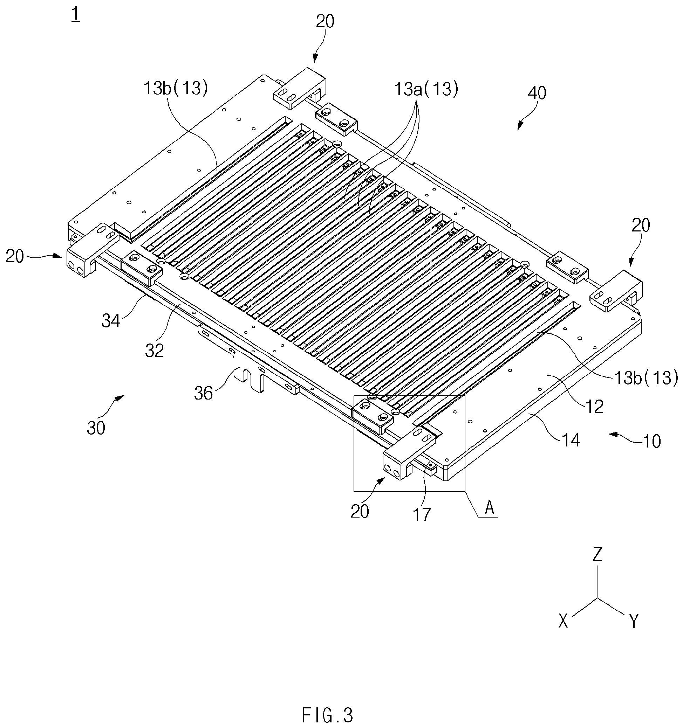

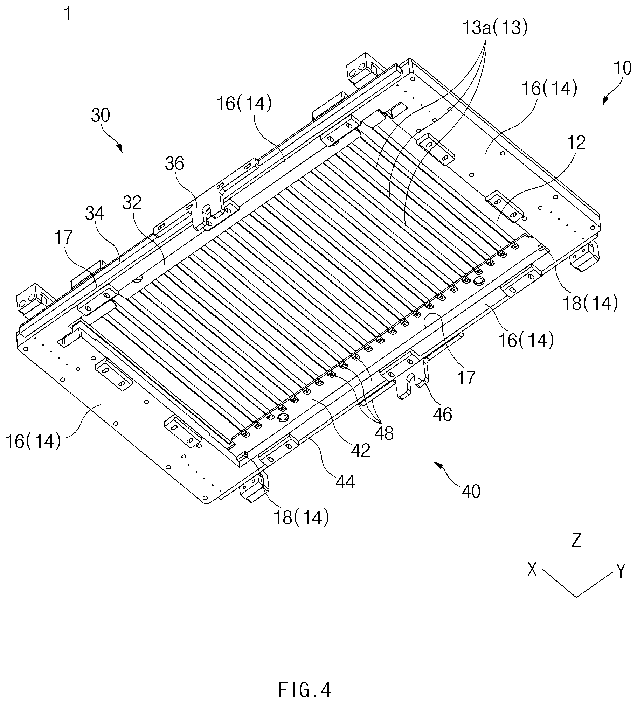

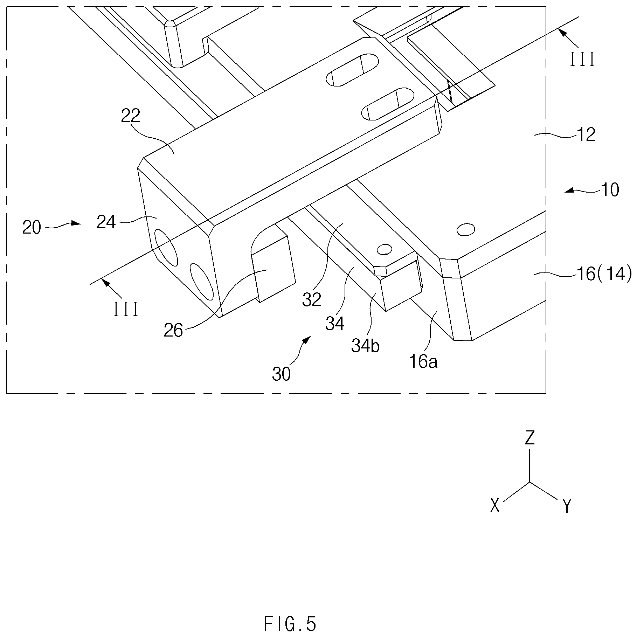

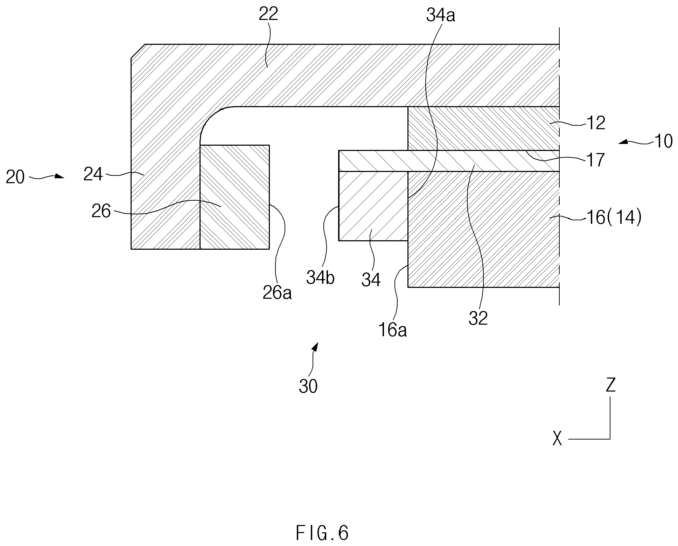

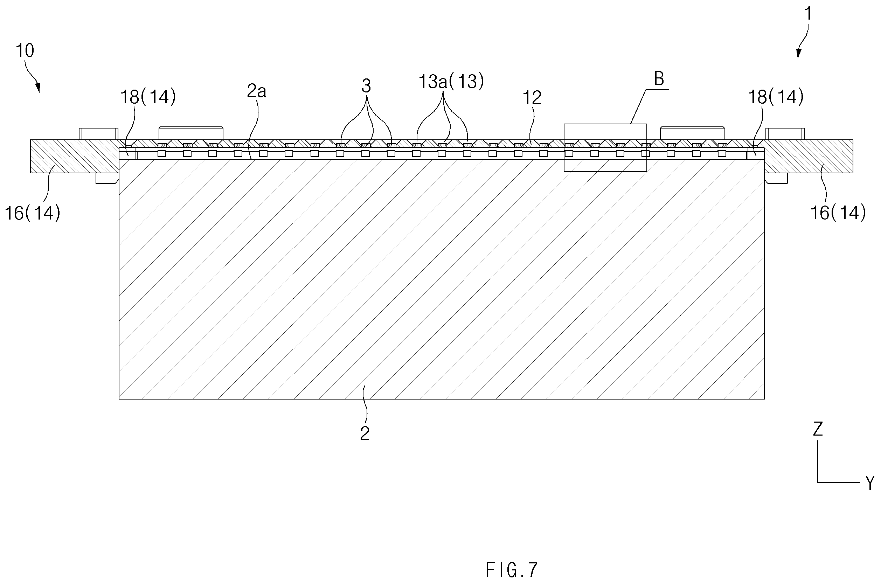

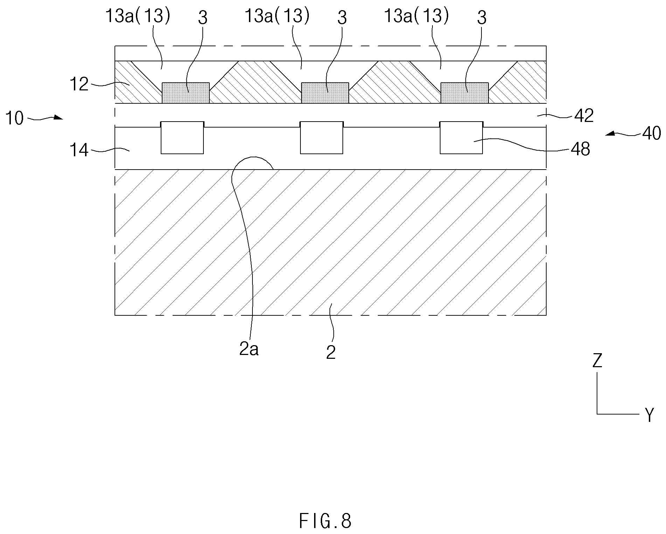

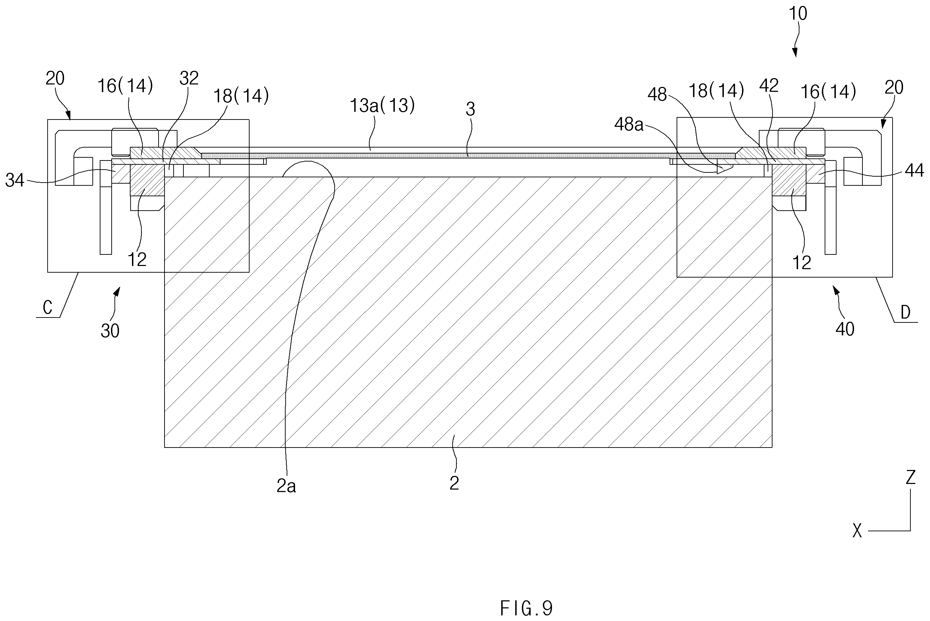

FIG. 3 is a perspective view of a battery module assembly device according to an embodiment of the present disclosure, viewed from above. FIG. 4 is a perspective view of a battery module assembly device according to an embodiment of the present disclosure, viewed from below. FIG. 5 is an enlarged view of part A of FIG. 3. FIG. 6 is a cross-sectional view taken along line III-III of FIG. 5. FIG. 7 is a cross-sectional view taken along line I-I of FIG. 1. FIG. 8 is an enlarged view of part B of FIG. 7. FIG. 9 is a vertical cross-sectional view taken along line II-II of FIG. 1.

Referring to FIGS. 1 to 4, the assembly device 1 according to an embodiment of the present disclosure may include a main frame 10. In this embodiment, the main frame 10 may be a frame for guiding a busbar 3 toward the semi-assembly 2. Accordingly, the busbar 3 may be accurately assembled in the correct position in the semi-assembly 2 without contact with a contamination source.

In this embodiment, the main frame 10 may include a plate unit 12. The plate unit 12 may be provided in the form of a plate that may face the upper surface 2a of the semi-assembly 2.

At this time, in this embodiment, the plate unit 12 may have a shape corresponding to the upper surface 2a of the semi-assembly 2. As shown, since the upper surface 2a of the semi-assembly 2 has a flat square shape, the plate unit 12 may be provided as a flat square plate. This plate unit 12 may have a sufficiently large area to cover the entire upper surface 2a of the semi-assembly 2.

Meanwhile, the shape of the plate unit 12 may be appropriately modified to correspond to the shape of the semi-assembly 2. For example, the plate unit 12 may have a shape in which at least one part is convexly or concavely curved.

Referring to FIGS. 1 to 4, FIGS. 7 and 8, a plurality of holes 13 may be formed in the plate unit 12 of the assembly device 1 according to an embodiment of the present disclosure. At this time, the holes 13 may include busbar holes 13a.

In this embodiment, the busbar holes 13a may be holes for guiding the busbar 3 to the upper surface 2a of the semi-assembly 2. To this end, the busbar holes 13a may be formed through the plate unit 12 in the vertical direction (Z-axis direction). Accordingly, the busbar 3 entering the upper side of the busbar hole 13a may fall to the lower side of the busbar hole 13a.

In this embodiment, the busbar hole 13a may extend long in the width direction (X-axis direction) of the plate unit 12. This may be to correspond to the shape so that the busbar 3 may enter. The shape of the busbar hole 13a may be modified according to the shape of the busbar 3. As an example, the busbar hole 13a may be formed so that a portion thereof is curved.

At this time, as shown in FIGS. 7 and 8, the cross-sectional area of the busbar hole 13a may increase toward the upper side (in the positive direction of the Z-axis). Therefore, the busbar 3 may enter more easily toward the upper side (in the positive direction of the Z-axis) of the busbar hole 13a.

Meanwhile, in this embodiment, the busbar hole 13a may be configured in plurality. And, the plurality of busbar holes 13a may be arranged in a row along the longitudinal direction (Y-axis direction) of the plate unit 12.

At this time, in this embodiment, the plurality of busbar holes 13a are configured to have the same shape. However, the plurality of busbar holes 13a may have different shapes as necessary.

Referring to FIGS. 1 to 4 again, in this embodiment, the holes 13 formed in the plate unit 12 may include side holes 13b formed through the plate unit 12. The side holes 13b may be configured in a pair and may be disposed on the side portions of the plurality of busbar holes 13a, respectively.

In this embodiment, the side hole 13b may be a hole for guiding other components assembled to the semi-assembly 2 in addition to the busbar 3. Of course, the side hole 13b may also function as a hole for guiding a busbar having a different shape or structure from the busbar 3 guided by the busbar hole 13a.

Meanwhile, referring to FIGS. 1, 2, and 4, the main frame 10 of the assembly device 1 according to an embodiment of the present disclosure may include a jig unit 14 provided on the lower surface of the plate unit 12.

In this embodiment, the jig unit 14 may be configured to fix the relative positions between the semi-assembly 2 and the plate unit 12. Accordingly, the busbar 3 may pass through the busbar hole 13a and fall to an appropriate position on the upper surface 2a of the semi-assembly 2 to be assembled.

In this embodiment, the jig unit 14 may include a jig member 16. The jig member 16 may be a member that extends or protrudes downward (in the negative direction of the Z-axis) from the lower surface of the plate unit 12.

At this time, in this embodiment, the jig member 16 may include a pair of first jig members 16. And, the pair of first jig members 16 may be spaced apart in the width direction (X-axis direction) of the plate unit 12 with a plurality of busbar holes 13a therebetween.

Accordingly, the upper portion of the semi-assembly 2 may be inserted and fixed between the pair of first jig members 16. More specifically, the relative positions of the plate unit 12 and the semi-assembly 2 may be fixed in the width direction (X-axis direction) of the plate unit 12 by the pair of first jig members 16.

Meanwhile, in this embodiment, the first jig member 16 may extend long along the edge provided on the upper portion of the semi-assembly 2. This may be to allow the pair of first jig members 16 to more stably fix the semi-assembly 2. To this end, in this embodiment, the first jig member 16 may extend long in the length direction (Y-axis direction) of the plate unit 12.

In this embodiment, the jig unit 14 may further include a pair of second jig members 16. And, the pair of second jig members 16 may be spaced apart in the length direction (Y-axis direction) of the plate unit 12 with a plurality of busbar holes 13a therebetween.

Accordingly, the jig unit 14 may more stably fix the upper portion of the semi-assembly 2. Specifically, the relative positions of the plate unit 12 and the semi-assembly 2 may be fixed in the length direction (Y-axis direction) of the plate unit 12 by the pair of second jig members 16.

In other words, in this embodiment, the jig member 16 of the jig unit 14 may be provided as a ring-shaped member into which the semi-assembly 2 may be inserted and fixed when viewed in the vertical direction (Z-axis direction).

Meanwhile, in this embodiment, the second jig member 16 may extend long along the edge provided on the upper portion of the semi-assembly 2. This may be to allow the pair of second jig members 16 to more stably fix the semi-assembly 2. To this end, in this embodiment, the second jig member 16 may extend long in the width direction (X-axis direction) of the plate unit 12.

As described above, according to the assembly device 1 according to an embodiment of the present disclosure, the relative positions of the plate unit 12 and the semi-assembly 2 may be fixed by the jig unit 14. Accordingly, the busbar hole 13a of the plate unit 12 may guide the busbar 3 to a part where the busbar 3 is to be assembled in the upper surface 2a of the semi-assembly 2.

Referring to FIGS. 1, 2, and 4 again, in this embodiment, the upper portion of the semi-assembly 2 may be inserted and fixed between the jig members 16. Therefore, the upper surface 2a of the semi-assembly 2 and the lower surface of the plate unit 12 may face each other.

At this time, the upper surface 2a of the semi-assembly 2 and the lower surface of the plate unit 12 may need to be spaced apart to some extent. This is because, if the upper surface 2a of the semi-assembly 2 is in contact with the lower surface of the plate unit 12, the busbar 3 disposed in the busbar hole 13a of the plate unit 12 cannot fall downward.

To this end, the jig unit 14 of the assembly device 1 according to an embodiment of the present disclosure may further include a spacing member 18. The spacing member 18 may be a member for allowing the lower surface of the plate unit 12 and the upper surface 2a of the semi-assembly 2 to be spaced apart in the vertical direction (Z-axis direction).

In this embodiment, the spacing member 18 may have a block shape that protrudes from one of the pair of first jig members 16 toward the other. Of course, the spacing member 18 may also protrude from one of the pair of second jig members 16 toward the other.

Accordingly, as shown in FIGS. 7 and 9, the upper surface 2a of the semi-assembly 2 entering between the pair of first jig members 16 may be spaced apart from the lower surface of the plate unit 12 by the thickness of the spacing member 18 in the vertical direction (Z-axis direction).

Meanwhile, in this embodiment, the spacing member 18 may be configured in plurality. In the embodiment shown, the spacing member 18 is configured in four pieces. Two of the spacing members 18 may protrude from one of the pair of first jig members 16, and may be disposed to be spaced apart in the length direction (Y-axis direction) of the plate unit 12. And, the remaining two spacing members 18 may protrude from the other of the pair of first jig members 16, and may be spaced apart in the length direction (Y-axis direction) of the plate unit 12.

Accordingly, the plurality of spacing members 18 may allow the edge portion of the upper surface 2a of the semi-assembly 2 and the plate unit 12 to be spaced apart, respectively. Therefore, the distance between the upper surface 2a of the semi-assembly 2 and the plate unit 12 may be spaced in a balanced manner.

Meanwhile, referring to FIGS. 3 to 6, a sliding hole 17 may be formed in the main frame 10 of the assembly device 1 according to an embodiment of the present disclosure. The sliding hole 17 may be a hole where support frames 30, 40 to be described later are slidably coupled.

In this embodiment, the sliding hole 17 may be formed through the main frame 10 so that one side thereof may be connected to the lower surface of the plate unit 12. More specifically, the sliding hole 17 may be penetrated by the jig member 16 in the width direction (X-axis direction) of the plate unit 12. Accordingly, the support frames 30, 40 may be moved on the lower surface of the plate unit 12 in the penetration direction of the sliding hole 17.

At this time, in this embodiment, the sliding hole 17 may extend long in the length direction (Y-axis direction) along the edge of the plate unit 12. And, the sliding hole 17 may be configured in a pair and be provided on both sides of the plate unit 12 in the width direction (X-axis direction), respectively. This may be to allow multiple support frames 30, 40 to be slidably coupled.

Referring to FIGS. 3 to 6, the assembly device 1 according to an embodiment of the present disclosure may include a stopper 20. The stopper 20 may be configured to limit the movement distance of the support frames 30, 40 to be described later.

In this embodiment, the stopper 20 may include an extension unit 22 and a stopper unit 24. The extension unit 22 may be a member that extends from the upper surface of the plate unit 12 to the outside of the edge of the plate unit 12.

At this time, in this embodiment, the extension unit 22 may extend side by side with or parallel to the movement direction of the support frames 30, 40. In this embodiment, since the support frames 30, 40 move in the width direction (X-axis direction) of the plate unit 12, the extension unit 22 may extend to the outside of the edge of the plate unit 12 so as to be side by side with or parallel to the width direction (X-axis direction) of the plate unit 12.

In this embodiment, the stopper unit 24 may be configured to directly limit the movement distance of the support frames 30, 40 to be described later. To this end, the stopper unit 24 may protrude downward (in the negative direction of the Z-axis) from the end of the extension unit 22. This may be to allow the stopper unit 24 to face the support frames 30, 40 in the movement direction (X-axis direction).

Accordingly, the stopper unit 24 of the stopper 20 may limit the movement distance of the support frames 30, 40. Specifically, when the support frames 30, 40 move to the outside of the edge of the plate unit 12, the movement distance may be limited by being caught by the stopper unit 24. That is, the movement distance of the support frames 30, 40 may be limited to the location where the stopper unit 24 is positioned in an outward direction of the edge of the plate unit 12.

Meanwhile, in this embodiment, the stopper 20 may further include a cushioning unit 26. The cushioning unit 26 may be configured to cushion the impact when the support frames 30, 40 are caught by the stopper unit 24.

To this end, the cushioning unit 26 may be provided as a pad-shaped member made of a material having a greater elasticity than the stopper unit 24. For example, the cushioning unit 26 may be made of rubber or the like, but is not limited thereto.

Meanwhile, in this embodiment, the cushioning unit 26 may be provided on the side portion of the stopper unit 24. More specifically, the cushioning unit 26 may be provided on a side surface of the stopper unit 24 facing the support frames 30, 40. Accordingly, the cushioning unit 26 may cushion the impact caused by the collision between the support frames 30, 40 and the stopper unit 24.

Referring to FIGS. 3 and 4 again, the stopper 20 of the assembly device 1 according to an embodiment of the present disclosure may be configured in plurality. As shown, the stopper 20 may be configured in four pieces.

At this time, in this embodiment, two of the stoppers 20 may be provided on one side of the plate unit 12 in the width direction (X-axis direction), and the remaining two stoppers may be provided on the other side. This may be to limit each of the movement distances of a first support frame 30 and a second support frame 40 provided on both sides of the plate unit 12 in the width direction (X-axis direction), respectively.

Meanwhile, the two stoppers 20 provided on one side of the plate unit 12 in the width direction (X-axis direction) may be spaced apart from each other in the length direction (Y-axis direction) of the plate unit 12. In this embodiment, the support frames 30, 40 may have a long length in the length direction, and the two stoppers 20 are disposed to be spaced apart in the length direction in this way, so that the movement distances of the support frames 30, 40 may be limited in a balanced manner.

The number and position of these stoppers 20 may be modified as necessary in consideration of the structure, movement direction, or the like of the support frames 30, 40.

Referring to FIGS. 1 to 4 and FIG. 6, the assembly device 1 according to an embodiment of the present disclosure may include the support frames 30, 40. In this embodiment, the support frames 30, 40 may be frames for supporting or releasing a busbar 3 disposed in a busbar hole 13a from the lower side. Accordingly, the busbar 3 may be positioned and fixed inside the busbar hole 13a or may fall to the lower side of the busbar hole 13a.

In this embodiment, the support frames 30, 40 may include a first support frame 30 and a second support frame 40. The first support frame 30 may be a frame for supporting or releasing one end of the busbar 3 disposed in the busbar hole 13a, and the second support frame 40 may be a frame for supporting or releasing the other end of the busbar 3 disposed in the busbar hole 13a.

In this embodiment, the first support frame 30 may include a support unit 32. The support unit 32 may have a plate shape parallel to the lower surface of the plate unit 12. Therefore, the support unit 32 may stably support the busbar 3 disposed in the busbar hole 13a from the lower side.

At this time, in this embodiment, the support unit 32 may extend long in the length direction (Y-axis direction) of the plate unit 12. The support unit 32 may extend long in the length direction (Y-axis direction) from the busbar hole 13a positioned at one end to the busbar hole 13a positioned at the other end among the plurality of busbar holes 13a. Accordingly, the support unit 32 may each support the plurality of busbars 3 disposed in the plurality of busbar holes 13a, respectively.

Meanwhile, in this embodiment, the support unit 32 may be slidably coupled to the sliding hole 17 of the main frame 10. Accordingly, the support unit 32 may move in the width direction (X-axis direction) of the plate unit 12.

In this embodiment, the edge portion of one side of the support unit 32 in the width direction (X-axis direction) may move on the lower surface of the plate unit 12. At this time, one side of the support unit 32 in the width direction (X-axis direction) may be directed toward a central part of the busbar hole 13a. Hereinafter, the above edge portion is referred to as a support portion.

In this embodiment, as the support unit 32 moves, the support portion of the support unit 32 may open and close one side portion of the busbar hole 13a in the extension direction from the lower side of the busbar hole 13a.

More specifically, when the support unit 32 moves toward the center of the plate unit 12, the support portion overlaps one side portion of the busbar hole 13a in the extension direction in the vertical direction (Z-axis direction) and may close it.

Accordingly, one end of the busbar 3 disposed in the busbar hole 13a may be supported by the support portion of the support unit 32. Therefore, the busbar 3 may be positioned and fixed inside the busbar hole 13a. Hereinafter, the position of the support unit 32 as described above is referred to as a first position.

If the support unit 32 is moved in an outward direction of the edge of the plate unit 12, the support portion may be positioned to be misaligned with the busbar hole 13a in the vertical direction (Z-axis direction) and may open it.

Accordingly, one end of the busbar 3 disposed in the busbar hole 13a may no longer be supported by the support portion of the support unit 32. That is, the support of the busbar 3 may be released. Therefore, one end of the busbar 3 may fall to the lower side of the busbar hole 13a. Hereinafter, the position of the support unit 32 as described above is referred to as a second position.

Meanwhile, in this embodiment, the support unit 32 may have a sufficient width to protrude to the outside of the edge of the plate unit 12. In other words, the edge portion provided on the other side of the support unit 32 in the width direction (X-axis direction) may be positioned at the outside of the edge of the plate unit 12. This may function as a base for a catch unit 34 and an operating unit 36 to be described later.

Referring to FIGS. 3, 4, and 6, the first support frame 30 of the operating device 1 according to an embodiment of the present disclosure may include a catch unit 34. The catch unit 34 may be a part to be caught so that the movement distance of the first support frame 30 may be limited.

In this embodiment, the catch unit 34 may extend or protrude downward (in the negative direction of the Z-axis) from the edge portion provided on the other side of the support unit 32 in the width direction (X-axis direction). The catch unit 34 may be connected or coupled to the support unit 32 to move together.

In this embodiment, the catch unit 34 may have a first catch surface 34a and a second catch surface 34b. The first catch surface 34a may be a surface of the outer surface of the catch unit 34 that faces the jig member 16 side of the main frame 10. And, the second catch surface 34b may be a surface of the outer surface of the catch unit 34 that faces the outside of the main frame 10.

In this embodiment, the first catch surface 34a may be configured to prevent the support unit 32 from moving further toward the center of the busbar hole 13a than the first position. When the support unit 32 is positioned at the first position, the first catch surface 34a may be in surface contact with the outer surface 16a of the jig member 16. Accordingly, the movement distance of the support unit 32 may be limited to the first position.

In this embodiment, the second catch surface 34b may be configured to prevent the support unit 32 from moving further toward the outside of the busbar hole 13a than the second position. When the support unit 32 is positioned at the second position, the second catch surface 34b may be in surface contact with the outer surface 26a of the cushioning unit 26. Accordingly, the movement distance of the support unit 32 may be limited to the second position.

Meanwhile, the first support frame 30 of the operating device 1 according to an embodiment of the present disclosure may include an operating unit 36. The operating unit 36 may be configured to receive a driving force for moving the first support frame 30.

In this embodiment, the operating unit 36 may be provided on an edge portion provided on the other side of the support unit 32 in the width direction (X-axis direction). And, the operating unit 36 may extend to the outside of the support unit 32. Accordingly, the operating unit 36 may be gripped by an operator, or may be operatively coupled to a predetermined actuator to receive a driving force.

Referring to FIGS. 1 to 4 again, the second support frame 40 of the operating device 1 according to an embodiment of the present disclosure may include a support unit 42, a catch unit 44, and an operating unit 46.

At this time, in this embodiment, the support unit 42, the catch unit 44, and the operating unit 46 of the second support frame 40 may be formed symmetrically with the support unit 32, the catch unit 34, and the operating unit 36 of the first support frame 30 described above, centered on the busbar hole 13a.

Accordingly, the second support frame 40 may support the other end of the busbar 3 disposed in the busbar hole 13a or release the support. This will be described in detail as follows.

In this embodiment, as the support unit 42 moves, one side of the support unit 42 in the width direction (X-axis direction) may move on the lower surface of the plate unit 12. At this time, one side of the support unit 42 in the width direction (X-axis direction) may be directed toward a central part of the busbar hole 13a. Hereinafter, the above edge portion is referred to as a support portion.

In this embodiment, as the support unit 42 moves, the support portion of the support unit 42 may open and close the other side portion of the busbar hole 13a in the extension direction from the lower side of the busbar hole 13a.

More specifically, when the support unit 42 moves toward the center of the plate unit 12, the support portion of the support unit 42 overlaps one side portion of the busbar hole 13a in the extension direction in the vertical direction (Z-axis direction) and may close it.

Accordingly, the other end of the busbar 3 disposed in the busbar hole 13a may be supported by the support portion of the support unit 42. Therefore, the busbar 3 may be positioned and fixed inside the busbar hole 13a. Hereinafter, the position of the support unit 42 as described above is referred to as a third position.

If the support unit 42 is moved in an outward direction of the edge of the plate unit 12, the support portion of the support unit 42 may be positioned to be misaligned with the busbar hole 13a in the vertical direction (Z-axis direction) and may open it.

Accordingly, the other end of the busbar 3 disposed in the busbar hole 13a may no longer be supported by the support portion of the support unit 42. That is, the support of the busbar 3 may be released. Therefore, the other end of the busbar 3 may fall to the lower side of the busbar hole 13a. Hereinafter, the position of the support unit 42 as described above is referred to as a fourth position.

Meanwhile, referring to FIGS. 4 and 9, the second support frame 40 according to an embodiment of the present disclosure may further include a guide unit 48. The guide unit 48 may be configured to guide the other end of the busbar 3 falling from the busbar hole 13a to the upper surface of the semi-assembly.

In this embodiment, the guide unit 48 may be provided as a block-shaped member that protrudes downward from the support portion of the support unit 42. And, the guide unit 48 may be provided with a guide surface 48a. The guide surface 48a may be a surface of the outer surface of the guide unit 48 that faces the central part of the busbar hole 13a.

In this embodiment, the other end of the busbar 3 that is released from support by the second support frame 40 and falls may slide on the guide surface 48a of the guide unit 48 and fall downward. That is, the other end of the busbar 3 may be guided by the guide surface 48a and fall. Therefore, the position at which the other end of the busbar 3 falls may be controlled according to the inclination of the guide surface 48a.

In this embodiment, the guide surface 48a may extend in a direction perpendicular to the movement direction of the support unit 42. In other words, the guide surface 48a may extend in the vertical direction (Z-axis direction). Accordingly, the other end of the busbar 3 may fall downward with limited movement in the horizontal direction.

Hereinafter, a process of assembling a busbar to a semi-assembly by a battery module assembly device according to an embodiment of the present disclosure will be described in detail with different drawings.

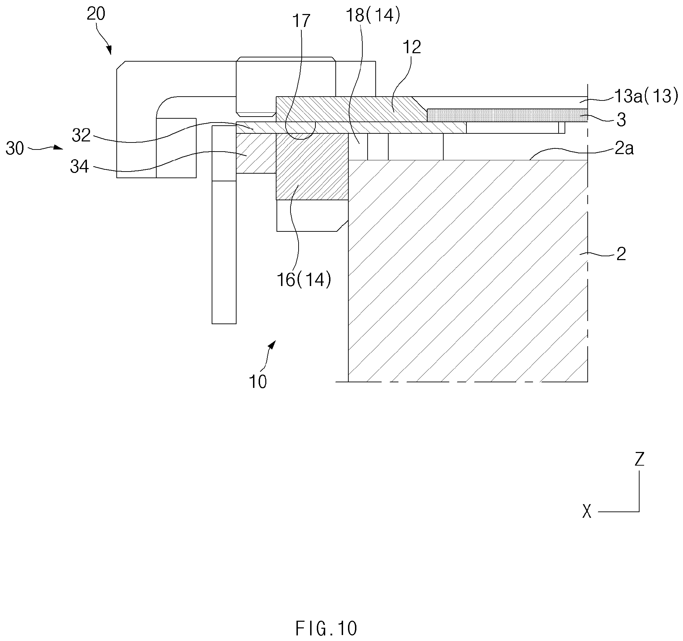

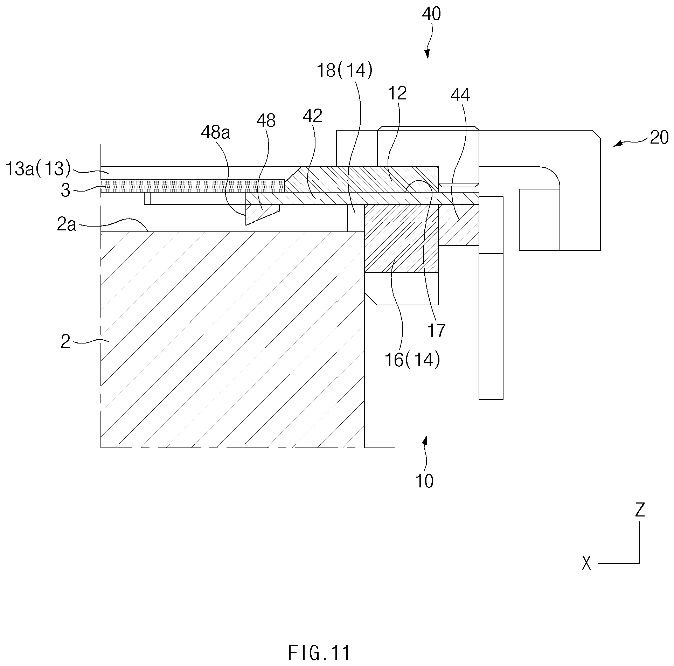

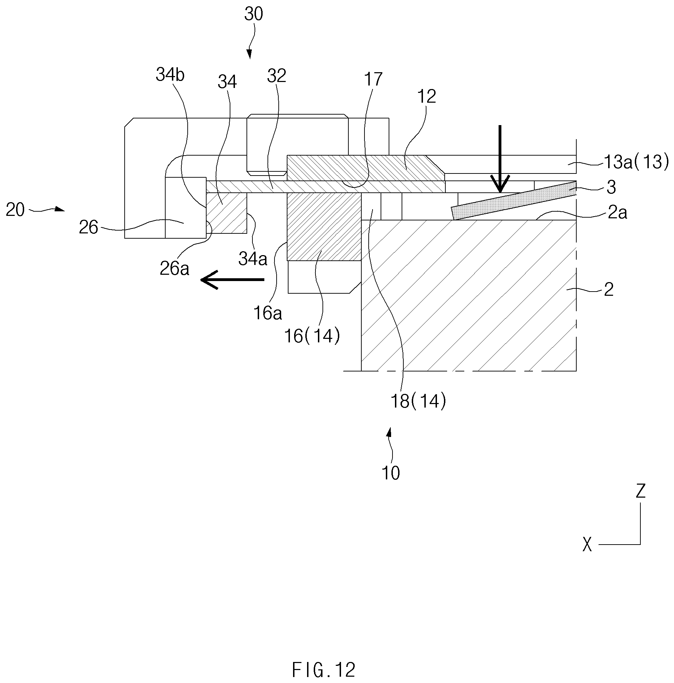

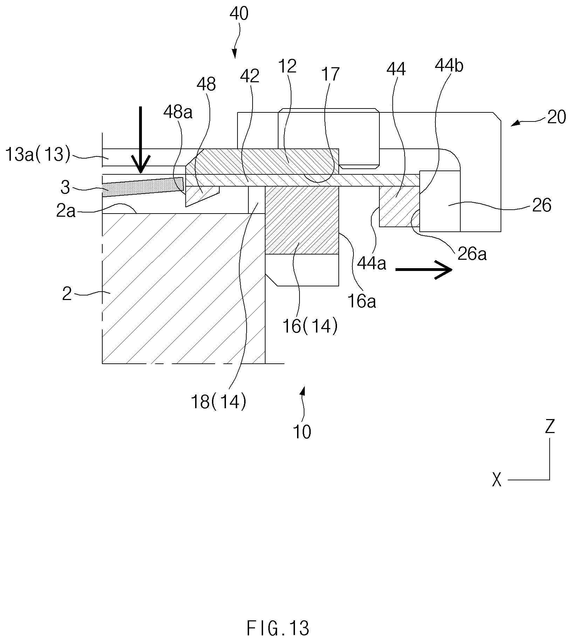

FIG. 10 is an enlarged view of part C of FIG. 9. At this time, the first support frame is positioned at the first position. FIG. 11 is an enlarged view of part D of FIG. 9. At this time, the second support frame is positioned at the third position. FIG. 12 is an enlarged view of part C of FIG. 9. At this time, the first support frame is positioned at the second position. FIG. 13 is an enlarged view of part D of FIG. 9. At this time, the second support frame is positioned at the fourth position.

Referring to FIGS. 10 and 11, the busbar 3 may be inserted and disposed in the busbar hole 13a of an assembly device 1 according to an embodiment of the present disclosure. At this time, the support unit 32 of the first support frame 30 may support one end of the busbar 3 from the lower side, and the support unit 42 of the second support frame 40 may support the other end of the busbar 3 from the lower side. Accordingly, the busbar 3 may be positioned and fixed in the busbar hole 13a.

Referring to FIGS. 12 and 13, the support frames 30, 40 of the assembly device 1 according to an embodiment of the present disclosure may release the support for the busbar 3 and allow the busbar 3 to fall downward (in the negative direction of the Z-axis) from the busbar hole 13a.

More specifically, as shown in FIG. 12, as the support unit 32 of the first support frame 30 moves in an outward direction (positive direction of the X-axis) of the plate unit 12, the support of one end of the busbar 3 may be released. As a result, one end of the busbar 3 may fall to the lower side of the busbar hole 13a and be assembled to the upper surface 2a of the semi-assembly 2.

And, as shown in FIG. 13, as the support unit 42 of the second support frame 40 moves in an outward direction (negative direction of the X-axis) of the plate unit 12, the support of the other end of the busbar 3 may be released. As a result, the other end of the busbar 3 may fall to the lower side of the busbar hole 13a and be assembled to the upper surface 2a of the semi-assembly 2.

At this time, the other end of the busbar 3 may be guided by the guide unit 48. More specifically, the other end of the busbar 3 may slide on the guide surface 48a of the guide unit 48 and fall downward.

Here, since the guide surface 48a extends vertically in the vertical direction, the other end of the busbar 3 may be dropped and assembled onto the upper surface 2a of the semi-assembly 2 while its position in the horizontal direction (X-axis direction) remains unchanged. Accordingly, the busbar 3 may be dropped and assembled accurately at the correct position on the upper surface 2a of the semi-assembly 2.

Meanwhile, in this embodiment, the first support frame 30 and the second support frame 40 described above may be sequentially moved with respect to the main frame 10. In other words, one of the first support frame 30 and the second support frame 40 may be moved first, so that one of both ends of the busbar 3 may be assembled to the semi-assembly 2 first, and the other of the first support frame 30 and the second support frame 40 may be moved next, so that the other of both ends of the busbar 3 may be assembled to the semi-assembly 2 next.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery module assembly device
2: Semi-assembly
3: Busbar
10: Main frame
20: Stopper
30: First support frame
40: Second support frame

## Claims

1. A battery module assembly device for assembling busbars to a semi-assembly of a battery module, the battery module assembly device comprising:
a main frame in which busbar holes are formed; and
a support frame movably coupled to the main frame to support the busbars disposed in the busbar holes or to release the support to allow the busbars to fall downward.

2. The battery module assembly device according to claim 1,
wherein the main frame comprises a plate unit which has a plate shape with its lower surface facing an upper portion of the semi-assembly and through which the busbar holes are formed.

3. The battery module assembly device according to claim 2,
wherein the main frame further comprises a jig unit provided on a lower surface of the plate unit to fix relative positions of the plate unit and the semi-assembly.

4. The battery module assembly device according to claim 3,
wherein the jig unit comprises a pair of jig members extending downward from the lower surface of the plate unit and spaced apart with the busbar holes therebetween.

5. The battery module assembly device according to claim 4,
wherein the jig unit comprises a spacing member protruding from one of the pair of jig members toward the other.

6. The battery module assembly device according to claim 1,
wherein the support frame comprises a support unit slidably coupled to the main frame to allow the busbar disposed in the busbar hole to move from a first position supporting the busbar from a lower side to a second position spaced apart from the first position.

7. The battery module assembly device according to claim 6,
wherein the main frame has a plate unit which has a plate shape with its lower surface facing an upper portion of the semi-assembly and through which the busbar holes are formed, and
the support unit is configured to move on the lower surface of the plate unit to open and close at least a portion of the busbar holes.

8. The battery module assembly device according to claim 7,
wherein the support unit overlaps at least a portion of the busbar holes in the vertical direction at the first position, and is disposed to be misaligned with the busbar holes in the vertical direction at the second position.

9. The battery module assembly device according to claim 7,
wherein the support unit has a plate shape parallel to the lower surface of the plate unit.

10. The battery module assembly device according to claim 7,
wherein the busbar holes are provided in plurality and arranged in a row, and
the support unit extends in a direction in which the plurality of busbar holes are arranged.

11. The battery module assembly device according to claim 6,
wherein the support frame further comprises a guide unit extending downward from the support unit to guide busbars falling downward from the busbar holes.

12. The battery module assembly device according to claim 11,
wherein a side portion of the guide unit is provided with a guide surface facing the center of the busbar hole and extending in the vertical direction.

13. The battery module assembly device according to claim 12,
wherein the guide surface is perpendicular to the movement direction of the support unit.

14. The battery module assembly device according to claim 6,
wherein the support frame further comprises a catch unit extending in a direction perpendicular to the movement direction of the support unit from the support unit,
wherein the catch unit is in contact with the main frame when the support unit is positioned at the first position and is spaced apart from the main frame when the support unit is positioned at the second position.

15. The battery module assembly device according to claim 6, further comprising:
a stopper for limiting the movement distance of the support frame,
wherein the stopper is spaced apart from the support frame when the support unit is positioned at the first position and is in contact with the support frame when the support unit is positioned at the second position.

16. The battery module assembly device according to claim 15,
wherein the stopper comprises:
an extension unit extending parallel to the movement direction of the support frame from the main frame; and
a stopper unit protruding from the extension unit to face the support frame in the movement direction.

17. The battery module assembly device according to claim 16,
wherein the stopper further comprises a cushioning unit provided on a side portion of the stopper unit to be in contact with or spaced apart from the support frame in the movement direction,
wherein the cushioning unit has a greater elasticity than the stopper unit.

18. The battery module assembly device according to claim 1,
wherein the support frame comprises:
a first support frame that supports one side of the busbar disposed in the busbar hole or releases the support; and
a second support frame that supports the other side of the busbar disposed in the busbar hole or releases the support.

19. The battery module assembly device according to claim 18,
wherein the first support frame and the second support frame are configured to be sequentially movable with respect to the main frame.

20. The battery module assembly device according to claim 18,
wherein the busbar hole extends in the horizontal direction, and
the support frame is configured to be movable in the extension direction of the busbar hole.
